# EUROPÄISCHE PATENTSCHRIFT

(11) **EP 3 570 942 B1**
(45) Veröffentlichungstag und Bekanntmachung des Hinweises auf die Patenterteilung: **29.10.2025**
(21) Anmeldenummer: 18701006.1
(22) Anmeldetag: 16.01.2018
(51) Int. Cl.: A62B 35/00, A62B 35/04, E04G 21/32, E03C 1/046

(54) **SICHERUNGSEINRICHTUNG FÜR EIN ABSEIL- ODER ABSTURZSYSTEM**
SECURING DEVICE FOR AN ABSEILING OR FALL-PROTECTION SYSTEM
DISPOSITIF DE FIXATION POUR SYSTÈME DE RAPPEL OU DE CHUTE

(30) Priorität: 17.01.2017 AT 5000717 U
(43) Veröffentlichungstag der Anmeldung: 27.11.2019
(73) Patentinhaber: SAFE Patentverwaltungs- und Verwertungs GmbH, 4582 Spital/Pyhrn (AT)
(72) Erfinder: AICHHOLZER, Josef, 9800 Spittal/Drau (AT); MARK, Rudolf, 4580 Windischgarsten (AT); CANINS, Karl-Heinz, 9620 Hermagor (AT)
(74) Vertreter: KLIMENT & HENHAPEL
(86) Internationale Anmeldenummer: PCT/EP2018/051030
(87) Internationale Veröffentlichungsnummer: WO 2018/134210

(56) Entgegenhaltungen:
- WO-A1-01/28632
- WO-A1-2014/044804
- ANONYMOUS: "MARK Save A Life Katalog 2014", 3 December 2013 (2013-12-03), www.savealife.at, pages 1 - 27, XP055460548, Retrieved from the Internet <URL:https://web.archive.org/web/20131203122117/http://www.savealife.at:80/downloads/download/0f9efdcaf8960a680b7ece913f2e20.pdf> [retrieved on 20180319]
- "Funktionstest / Function test MARK Gekko", YOUTUBE, 30 October 2012 (2012-10-30), pages 4 pp., XP054978195, Retrieved from the Internet <URL:https://youtu.be/mHhZgP_OetA> [retrieved on 20180319]

## Beschreibung

### GEBIET DER ERFINDUNG

Die Erfindung betrifft eine Sicherungseinrichtung, vorzugsweise Anschlagpunkt, für ein Abseil- oder Absturzsystem, umfassend
- einen Führungsteil, welcher eine Ausnehmung aufweist,
- eine Anschlussplatte, welche mit einem Untergrund verbindbar ist und über zumindest zwei Verbindungsmittel mit dem Führungsteil verbunden ist und
- einen Ring zur Anbindung von Sicherungsmitteln,
wobei der Ring durch die Ausnehmung geführt ist und in dieser bewegbar gelagert ist, wodurch der Ring in einer Grundposition parallel zu einer ebenen Auflagefläche der Anschlussplatte ausgerichtet ist und in einer Arbeitsposition einen Winkel ungleich 0° mit der Auflagefläche einschließt.

### STAND DER TECHNIK

Sicherungseinrichtungen, beispielsweise Anschlagpunkte, dienen zur Absicherung von Personen, Gegenständen oder Tieren in Gebäuden oder Anlagen, als jener Teil eines Absturz- oder Abseilsystems welcher fest mit einem Untergrund, wie einer Wand oder einem Gestänge, verbunden ist. Bei derartigen Systemen, wie sie beispielsweise im Rahmen der Arbeitssicherung, etwa bei der Außenreinigung von Gebäuden oder Montagearbeiten in der Höhe, üblich sind, wird ein Sicherungsmittel, wie beispielsweis ein Seil, ein Gurt oder eine Leine, einerseits an der Sicherungseinrichtung und andererseits an dem zu sichernden Objekt, beispielsweise an einem Auffanggurt einer Person oder einem Lastengurt eines Gegenstandes, befestigt. Zur Befestigung des Sicherungsmittels an der Sicherungseinrichtung wird in der Regel ein Karabiner oder Haken verwendet, welcher in die Sicherungseinrichtung, insbesondere den Anschlagpunkt, eingehängt werden.

Da Sicherungseinrichtungen, insbesondere Anschlagpunkte, in der Regel schon bei der Errichtung von Gebäuden geplant und angebracht werden, sich jedoch nicht ständig im Einsatz befinden, sollen diese möglichst platzsparend und unauffällig angebracht werden. Daher schlägt die EP 1222001 B1 eine Sicherungseinrichtung vor, welche einen Führungsteil und einen beweglichen Ring, dort als Schnalle bezeichnet, umfasst, wobei der bewegliche Ring derart in einer L-förmige Kerbe eingepasst ist, dass er im Ruhezustand parallel an einer Grundplatte, auch Anschlussplatte genannt, anliegt. Durch eine Bewegung des Rings in der Kerbe, kann dieser um 90° gedreht werden, sodass der Ring benutzt werden kann, um ein Sicherungsmittel daran zu befestigen. Der Ring ist dabei grundsätzlich eben ausgebildet und weist eine, vorzugsweise rechtwinkelige, Ausnehmung zur Einpassung des Rings in die Kerbe bzw. zur Befestigung eines Sicherungsmittels auf.

Während die Sicherungseinrichtung im Einsatz entweder gar nicht belastet ist, beispielsweise wenn die Sicherungseinrichtung in einem Absturzsystem angewendet wird und nur im Falle eines Absturzes belastet ist, oder zu großen Teilen rein statisch belastet ist, beispielsweise wenn die Sicherungseinrichtung in einem Abseilsystem angewendet wird und ein Objekt, wie eine Person oder ein Gegenstand, die Sicherungseinrichtung hauptsächlich durch sein Eigengewicht belastet, können auch stoßartige hohe dynamische Belastungen auf die Sicherungseinrichtung einwirken, die sich durch eine in den Ring eingeleitete Kraft äußern. Solche dynamischen Belastungen treten beispielsweise beim Absturz eines zu sichernden Objektes auf, sobald das Sicherungsmittel gespannt ist und die durch den Fall entstandene Kraft in den Ring eingeleitet wird.

Bei einer Sicherungseinrichtung gemäß dem Stand der Technik ist jedoch im Falle einer dynamischen Belastung der Ring das einzige Bauteil, welches sich bei Überschreitung eines oberen Schwellwertes der eingeleiteten Kraft, plastisch verformen kann und so die, durch die dynamische Belastung entstandene, Energie abbaut. Durch geringe Verformungen ist die Dämpfung der dynamischen Belastung nur sehr gering und es wirken hohe Kräfte auf das zu sichernde Objekt.

Ein weiterer Nachteil des Stands der Technik äußert sich darin, dass nach einer erfolgten dynamischen Belastung, bei der ein oberer Schwellwert der eingeleiteten Kraft überschritten wurde, die plastische Verformung nur an dem Ring wahrgenommen wird. Dadurch ließe sich alleine durch den Tausch des Rings eine derart gestaltete Sicherungseinrichtung ohne weiteres wieder in Betrieb nehmen. Dass sich jedoch auch das metallische Gefüge des Führungsteils aufgrund der hohen Belastung verändert und gegebenenfalls unter einer erneuten dynamischen Belastung versagen würde, bleibt dem Anwender verborgen.

Die WO 2014/044804 A1 offenbart ein Befestigungselement für die Fixierung einer Sicherheitseinrichtung in einem Untergrund, insbesondere einem Mauerwerk.

Die WO 01/28632 A1 offenbart eine Sicherheitseinrichtung für eine Abseilvorrichtung zur Sicherung von Personen, Tieren und Gegenständen.

### AUFGABE DER ERFINDUNG

Es ist daher eine Aufgabe der Erfindung die Nachteile des Stands der Technik zu überwinden und eine Sicherungseinrichtung vorzuschlagen, die einen Führungsteil umfasst, welcher als Sturzindikator fungiert, sodass eine Überprüfung der Einsatzfähigkeit mit einfachen Mitteln durchführbar ist. Eine weitere Aufgabe ist es, die Dämpfung dynamischer Belastungen durch die Sicherungseinrichtung zu erhöhen. Des Weiteren soll sich die Sicherungseinrichtung durch eine einfache und kostengünstige Herstellung sowie einen geringen Wartungsbedarf auszeichnen.

### DARSTELLUNG DER ERFINDUNG

Diese Aufgabe wird durch eine Sicherungseinrichtung mit den Merkmalen des Hauptanspruchs gelöst. Vorteilhafte Ausgestaltungen der Erfindung sind in den jeweiligen abhängigen Ansprüchen definiert.

Die Erfindung betrifft eine Sicherungseinrichtung, vorzugsweise Anschlagpunkt, für ein Abseil- oder Absturzsystem, umfassend
- einen Führungsteil, welcher eine Ausnehmung aufweist
- eine Anschlussplatte, welche mit einem Untergrund verbindbar ist und über zumindest zwei Verbindungsmittel mit dem Führungsteil verbunden ist und
- einen Ring zur Anbindung von Sicherungsmitteln,
wobei der Ring durch die Ausnehmung geführt ist und in dieser bewegbar gelagert ist, wodurch der Ring in einer Grundposition parallel zu einer ebenen Auflagefläche der Anschlussplatte ausgerichtet ist und in einer Arbeitsposition einen Winkel ungleich 0° mit der Auflagefläche einschließt.

Es ist weiter vorgesehen, dass der Führungsteil eine Deckplatte und Wandelemente umfasst, wobei sich die Wandelemente winkelig, vorzugsweise rechtwinkelig, von der Deckplatte in Richtung der Anschlussplatte erstrecken und sich ein von Deckplatte und Wandelementen begrenzter materialfreier Raum ausbildet, um eine plastische Verformung des Führungsteils im Bereich der Ausnehmung zu ermöglichen, wenn eine über den Ring eingeleitete Kraft einen oberen Schwellwert überschreitet. Bevorzugt bestehen Führungsteil und Anschlussplatte aus einem metallischen Werkstoff, insbesondere aus Stahl, besonders bevorzugt aus rostfreiem Stahl.

Eine Hauptursache der Nachteile des Stands der Technik besteht in der massiven Ausführung des Führungsteils, welcher üblicher Weise als Frästeil aus dem Vollen gefertigt ist. Durch die großen Wandstärken bzw. durch die daraus resultierenden hohen Materialansammlungen, ist der Führungsteil sehr steif und nur bei sehr hohen Kräften verformbar. Um diesen Nachteil zu überwinden, weist der Führungsteil im Zentrum einen materialfreien Raum auf, welcher seitlich von den Wandelementen begrenzt wird und auf der der Anschlussplatte gegenüber liegenden Seite durch die Deckplatte, welche eine beliebige geometrische Form aufweisen kann, begrenzt ist. Eine Wandstärke der Deckplatte bzw. der Wandelemente ist gegenüber dem Umfang der Deckplatte sehr klein gewählt und beträgt vorzugsweise zwischen 0,5 und 4 mm. Vorzugsweise ist die Wandstärke des gesamten Führungsteils gleich groß, wobei auch unterschiedliche Wandstärken denkbar sind.

Bevorzugt sind die Wandelemente am Umfang der Deckplatte angeordnet, wobei es natürlich auch denkbar ist, dass die Wandelemente parallel zum Umfang verlaufen, aber gegenüber dem Umfang nach innen versetzt sind, sodass sich ein seitlicher Rand ausbildet. Die Deckplatte ist dabei vorzugsweise eben ausgebildet, wobei dadurch nicht ausgeschlossen ist, dass Abschnitte der Deckplatte aus der ebenen Fläche ausgewölbt sind. Besonders platzsparend ist der Führungsteil dann, wenn sich die Wandelemente rechtwinklig von der Deckplatte in Richtung der Anschlussplatte erstrecken. Somit bildet sich mit anderen Worten ein dosenförmiges Führungsteil aus, welches durch die Anschlussplatte verschlossen ist, womit der materialfreie Raum als Hohlraum zwischen Anschlussplatte, Deckplatte und Wandelementen ausgebildet ist. Die Verbindungsmittel durchqueren dabei den materialfreien Raum um Anschlussplatte und Führungsteil zu verbinden, wobei bevorzugt je zumindest ein Verbindungsmittel normal auf die Ausnehmung gesehen auf beiden Seiten der Ausnehmung angeordnet ist.

Durch die derartige Gestaltung des Führungsteils, wird die Steifigkeit drastisch gesenkt, sodass sich der Führungsteil bei einer in den Ring eingeleiteten Kraft über dem oberen Schwellwert plastisch verformt, wobei sich insbesondere der Bereich des Führungsteils, welcher in Kontakt mit dem Ring steht, plastisch verformt. Während bei einer in den Ring eingeleiteten Kraft unterhalb des oberen Schwellenwertes, der üblicher Weise je nach Anwendungsfall zwischen 1 kN und 3 kN beträgt, nur elastische Verformungen auftreten und Führungsteil sowie Ring erneut einsatzfähig sind, verformt sich der Führungsteil bei Überschreitung des oberen Schwellwertes derart, dass eine Beschädigung mit freiem Auge erkennbar ist bzw. dass eine Rückstellung des Rings in die Grundposition nicht mehr möglich ist.

Um die Verbindungsmittel, die beispielsweise als Gewindeschrauben ausgeführt sind, durch Führungsteil und Anschlussplatte zu führen, weist die Anschlussplatte erste Öffnungen und die Deckplatte zweite Öffnungen auf, welche bevorzugt parallel zu einander angeordnet sind. Dabei ist es denkbar, dass die Verbindungsmittel direkt mit dem Untergrund verbindbar sind und so durch die Fixierung der Verbindungsmittel mit dem Untergrund das Führungsteil auf die Anschlussplatte gepresst wird. Die Anschlussplatte kann dabei auch Teil eines speziell ausgebildeten Befestigungselementes sein, welches beispielsweise dynamische Lasten mittels Absorberelement dämpft oder an Metallprofilen, wie Metallständerwänden, Vorsatzschalen oder abgehängten Decken, angebracht ist und geeignet ist dynamische Lasten aufzunehmen.

Durch die verbesserte plastische Verformbarkeit des Führungsteils, was durch die Funktion als Sturzindikator und durch Energieabsorption im Falle zu großer Kräfte positive Eigenschaften und erwünschte Effekte mit sich bringt, treten jedoch auch negative Effekte auf: So kann es durch eine zu große Anzugskraft der Verbindungsmittel, durch welche Führungsteil und Anschlussplatte gegeneinander verspannt werden, zu einer ungewünschten Verformung des Führungsteils bzw. der Deckplatte im Bereich der zweiten Öffnungen kommen. Dadurch wird im besten Fall nur die Beweglichkeit des Rings verhindert, was durch eine Verringerung der Anzugskraft wieder aufhebbar ist. Im schlimmsten Fall führt die zu hohe Anzugskraft jedoch zu einer plastischen Verformung des Führungsteils, was durch die damit verbundene Änderung des metallischen Gefüges zu einer Versprödung führt, so dass der Führungsteil im Falle einer dynamischen Belastung bricht. Um dieses Sicherheitsrisiko zu minimieren und eine plastische Verformung des Führungsteils bei der Montage zu verhindern, ist daher erfindungsgemäß vorgesehen, dass zwischen jeweils einer ersten Öffnung und einer zweiten Öffnung ein Distanzelement angeordnet ist, um den Abstand zwischen Deckplatte und Anschlussplatte zu überbrücken. Da der materialfreie Raum zwischen erster und zweiter Öffnung durch das Distanzelement, das bevorzugt ringförmig ausgeführt ist, sodass die Verbindungsmittel das Distanzelement durchqueren können, lokal ausgefüllt ist, kann sich die Deckplatte nicht mehr in Richtung der Anschlussplatte biegen und eine plastische Verformung wird effektiv verhindert. Dabei kann das Distanzelement beispielsweise eine eingelegte, eingepresste oder eingeschweißte Hülse sein.

Eine Ausführungsvariante der Erfindung sieht vor, dass die Wandelemente als zumindest ein Paar zueinander paralleler einander gegenüberliegender erster Wandelemente und ein Paar zueinander paralleler einander gegenüberliegender zweiterWandelemente ausgebildet sind. Dadurch ist eine besonders platzsparende Anbringung möglich, insbesondere wenn die Deckfläche einen rechteckigen Grundriss aufweist. Die jeweils parallelen Wandelemente dienen außerdem zu einer gleichmäßigen Einleitung der Kraft in das Anschlusselement. Bevorzugt schließen die ersten und zweiten Wandelemente dabei einen rechten Winkel miteinander ein, sodass ein rechteckiger Umriss entsteht.

Da sich jeweils zwei gegenüberliegende parallele Wandelemente besonders gut zur beweglichen Lagerung des Rings eignen, ist in einer weiteren Ausführungsvariante einer erfindungsgemäßen Sicherungseinrichtung vorgesehen, dass die Ausnehmung in den beiden ersten Wandelementen ausgebildet ist und vorzugsweise die ersten Wandelemente in einen ersten Wandteil und einen zweiten Wandteil unterteilt. Die Ausnehmungen auf den beiden gegenüberliegenden Wandelelementen sind dabei deckungsgleich ausgebildet, sodass der durch den Führungsteil geführte Abschnitt des Rings im Wesentlichen parallel zu den zweiten Wandelementen steht. Ist jeweils im Bereich des ersten und des zweiten Wandteils ein Verbindungsmittel angeordnet, so ergibt sich eine besonders hohe Sicherheit gegen ein Ausreißen des Führungsteiles, sodass dieser Fall erst bei einer eingeleiteten Kraft eintritt, die ein Vielfaches des oberen Schwellenwertes beträgt.

Um eine kostengünstige Herstellung des Führungsteils mittels eines Tiefziehverfahrens zu ermöglichen, ist in einer weiteren Ausführungsvariante der Erfindung vorgesehen, dass die Wandelemente untereinander nur über die Deckplatte verbunden sind. Mit anderen Worten weisen die Kanten, welche sich zwischen den aneinander grenzenden Wandelementen ausbilden, eine Freistellung auf, sodass ein Wandelement mit den daran angrenzenden Wandelementen nicht direkt verbunden ist. So ist es möglich, das dosenförmige Führungsteil aus einer ebenen Platte herzustellen. Dementsprechend ist der Führungsteil gemäß einer bevorzugten Ausführungsvariante durch ein Tiefziehverfahren hergestellt. Tiefziehverfahren sind dem Fachmann an sich bekannt, und zeichnen sich dadurch aus, dass eine im Wesentlichen ebene Ausgangsplatte, welche zwischen einer Matrize und einer Form angeordnet ist, mittels einer auf die Matrize wirkenden Einpresskraft, in eine dreidimensionale Form übergeht.

Große plastische Verformungen des Führungsteils, insbesondere im Bereich der Ausnehmung und jenem Bereich der Deckplatte, welcher in Kontakt mit dem durch den Führungsteil geführten Abschnitt des Rings steht, bei Überschreitung des oberen Schwellwertes der eingeleiteten Kraft, stellen sich bei einer geringen Steifigkeit der die Ausnehmung aufweisenden, vorzugsweise ersten, Wandelemente ein. Daher ist in einer weiteren Ausführungsvariante einer erfindungsgemäßen Sicherungseinrichtung vorgesehen, dass die Ausnehmung in Richtung der Anschlussplatte zumindest teilweise geöffnet ist. So entspricht die Steifigkeit einem offenen statt einem geschlossenen Querschnitt.

Um zusätzlich zu der optischen Überprüfung auch eine einfache mechanische Überprüfung der Funktionstüchtigkeit zu ermöglichen, bei welcher Überprüfung der Ring, nach einer plastischen Verformung des Führungsteils, nicht mehr in die Grundposition bringbar ist, sieht eine weitere bevorzugte Ausführungsvariante der Erfindung vor, der Ring in der Grundposition auf einer sich parallel zur Auflagefläche erstreckenden, vom ersten Wandelement 11 ausgebildeten Lasche aufliegt und durch die Lasche von der Anschlussplatte beabstandet ist. Die Lasche ragt dabei fingerförmig in die Ausnehmung hinein und bildet eine Anlagefläche für den Ring in der Grundposition, welche im unverformten Zustand parallel zur Auflagefläche ausgerichtet ist. Beispielsweise kann die Lasche als L-förmig von den ersten Wandelementen, insbesondere den ersten Wandteilen, abstehender Falz ausgebildet sein, welche sich auf die dem materialfreien Raum gegenüberliegende Seite der Wandelemente erstreckt. Da sich durch die plastische Verformung des Führungsteils die Lasche aufbiegt und so ein Abstand zwischen Anschlussplatte und Lasche entsteht, wird durch die verformte Lasche verhindert, dass der Ring wieder, ohne zusätzlichen Kraftaufwand, in die Grundposition bewegbar ist.

Damit der Ring in der Grundposition durch Einrasten fixierbar ist, sieht eine weitere Ausführungsvariante vor, dass die Ausnehmung einen Rastabschnitt zur Fixierung des Rings in der Grundposition und einen Arbeitsabschnitt zur Aufnahme des Rings in der Arbeitsposition aufweist. Vorzugsweise sind der Rastabschnitt und der Arbeitsabschnitt durch zwei, vorzugsweise durch eine Fase verbundene, Rechtecke unterschiedlicher Größe ausgebildet, wobei Rastabschnitt und Arbeitsabschnitt in Richtung der Anschlussplatte gesehen bündig abschließen. Das kleinere Rechteck bildet den Rastabschnitt der Ausnehmung und entspricht dabei in seiner Abmessung normal zur Auflagefläche der Stärke des Rings, sodass der Ring in der Grundposition im Rastabschnitt fixiert ist und der Winkel zwischen Ring und Auflagefläche nicht verändert werden kann. Wird der Ring jedoch in eine Richtung parallel zur Auflagefläche, durch geringe Kraftaufwendung, verschoben, so befindet sich der Ring im durch das größere Rechteck gebildeten Arbeitsabschnitt der Ausnehmung, wobei sich der Arbeitsabschnitt normal zur Auflagefläche über den Rastabschnitt, vorzugsweise bis zur Deckplatte, erstreckt. Befindet sich der Ring im Arbeitsabschnitt, so ist der Ring schwenkbar und somit ein Winkel zwischen Ring und Auflagefläche zwischen größer 0° und kleiner gleich 180° einstellbar, wobei die Arbeitsposition üblicher Weise bei einem Winkel zwischen 30° und 150 ° liegt.

Besonders vorteilhaft ist es wenn der Arbeitsabschnitt einen als Fase ausgebildeten Übergang zum Rastabschnitt aufweist.

In einer weiteren bevorzugten Variante der Erfindung ist vorgesehen, dass die Verbindungsmittel als jeweils ein Verbindungselement, vorzugsweise eine Schraube, und eine mit dem Verbindungselement verbundene Aufnahme, vorzugsweise Gewindehülse, ausgebildet sind, wobei die Aufnahmen in ersten Öffnungen der Anschlussplatte angeordnet sind. Durch die kompakte Bauform ist der Führungsteil mittels der Verbindungselemente gegen die in der Anschlussplatte angeordneten Aufnahmen verspannbar, ohne dass die Verbindungselemente direkt mit dem Untergrund verbunden sind, was beispielsweise eine Vormontage der Sicherungseinrichtung an der Anschlussplatte oder einem die Anschlussplatte ausbildenden Befestigungselement ermöglicht. Dazu sind die Aufnahmen entweder in die ersten Öffnungen der Anschlussplatte eingepresst oder eingeklebt, oder aber sie sind mit der Anschlussplatte verschweißt und ragen entweder in die ersten Öffnungen oder schließen an diese an. Zur Herstellung der Verbindung mit dem Untergrund sieht eine weitere Ausführungsvariante vor, dass die Aufnahmen mit Verankerungsmitteln verbindbar sind, welche Verankerungsmittel zur Befestigung im Untergrund dienen. Solche Verankerungsmittel können beispielsweise als in die Aufnahmen einschraubbare Gewindestangen ausgebildet sein. Es ist aber auch denkbar, dass die Verankerungsmittel unabhängig von den Aufnahmen an der Anschlussplatte angebracht sind, beispielsweise als Teil eines Befestigungselementes.

Um die Fertigung bzw. Montage eines zusätzlichen separaten Distanzelementes zu umgehen, ist in weiteren besonders bevorzugten Ausführungsvarianten der Erfindung vorgesehen, dass der die ersten Öffnungen ausbildende Abschnitt der Anschlussplatte als eine sich in Richtung der Deckplatte ersteckende erste trichterförmige Auswölbung ausgebildet ist und/oder dass der die zweiten Öffnungen ausbildende Abschnitt der Deckplatte als eine sich in Richtung der Anschlussplatte ersteckende zweite trichterförmige Auswölbung ausgebildet ist. Unter trichterförmig wird dabei die streng monotone oder monotone Änderung des Querschnitts der Öffnung von einem ersten Durchmesser auf einen zweiten, kleineren, Durchmesser verstanden, wobei sich auch zylinderförmige Abschnitte ausbilden können. Solche trichterförmigen Auswölbungen lassensich beispielsweise durch ein Tiefziehverfahren besonders einfach herstellen.

Das Distanzelement ist dabei entweder vollständig durch die erste trichterförmige Auswölbung ausgebildet oder vollständig durch die zweite trichterförmige Auswölbung ausgebildet, sodass die erste Auswölbung der Anschlussplatte stumpf auf der Deckplatte aufliegt bzw. die zweite Auswölbung der Deckplatte stumpf auf der Anschlussplatte aufliegt.

In einer weiteren bevorzugten Ausführungsvariante ist vorgesehen, dass das Distanzelement von der ersten und zweiten trichterförmigen Auswölbung ausbildet ist, wobei sich zwischen den Auswölbungen eine Kontaktfläche ausbildet. Dies stellt eine besonders günstige Ausführungsvariante dar, da durch die Kombination der beiden Auswölbungen besonders große Distanzen überbrückt werden können, ohne dass es dabei zu hohen Anisotropie-Effekten in den Auswölbungen kommt, sodass eine besonders hohe Festigkeit der Auswölbungen erreicht wird. Die Anzugskraft wird also mittels der Kontaktfläche von der zweiten Auswölbung in die erste Auswölbung eingeleitet.

Um die in dem Ring wirkenden Kerbspannungen effektiv zu reduzieren bzw. deren Auftreten weitest gehend zu verhindern, ist in einer weiteren bevorzugten Ausführungsvariante vorgesehen, dass der Ring abschnittsweise einen Innenradius und einen Außenradius aufweist, wobei der Außenradius um den Faktor 2 bis 4 größer ist als der Innenradius und/oder der Innenradius des Rings in einem Bereich zwischen 10% und 30% einer Breite des Führungsteils liegt. Der Innenradius ist dabei jener Radius, welcher sich zwischen jeweils zwei inneren Kanten ausbildet. Ein weiterer positiver Effekt der sich durch die mittels Außenradius abgerundeten Außenkanten einstellt, äußert sich dadurch, dass die Verletzungsgefahr durch vorstehende spitze Kanten vermieden wird. Da die Breite des Führungsteils, also jener Abstand zwischen den die Ausnehmung aufweisenden Wandelementen bzw. zwischen den Ausnehmungen selbst, der zumindest notwendigen Abmessung der durch die inneren Kanten definierten Öffnung des Rings entspricht, ist das Verhältnis zwischen Breite und Innenradius besonders gut geeignet, um bei verschiedenen Größen der Sicherungseinrichtung die notwendigen Radien einzuhalten. Besonders vorteilhaft ist eine Breite zwischen 20 mm und 50 mm, ein Innenradius von zwischen 2 mm und 10 mm und einem Außenradius zwischen 8 mm und 30 mm.

Ein weiterer Vorteil der erfindungsgemäßen Gestaltung der Innen- und Außenradien des Rings besteht darin, dass sich im Falle einer stoßartigen dynamischen Belastung des Rings oberhalb der plastischen Grenzlast, welche beispielsweise beim Absturz eines zu sichernden Objektes auftritt, Fließgelenke im Bereich der Radien ausbilden. In anderen Worten ist die Geometrie der Radien bzw. des gesamten Rings derart gewählt, dass im Falle einer Belastung das Momentenmaximum im Bereich der Radien angeordnet ist. Durch die im Bereich der Fließgelenke gezielt herbeigeführte plastische Verformung des Rings kommt es zu einer größeren plastischen Dämpfung der auf das Objekt wirkenden Kraft, da ein höherer Anteil der dynamischen Belastung vom Ring als Verformungsenergie aufgenommen werden kann.

Bei der Dimensionierung des Führungsteils ist neben der Abmessung des Führungsteils in einer Richtung normal auf die Auflagefläche, also der Höhe des Führungsteils, auch die Wandstärke von großer Bedeutung. Daher sieht eine weitere bevorzugte Ausführungsvariante einer erfindungsgemäßen Sicherungsvorrichtung vor, dass eine Wandstärke des Führungsteils in einem Bereich zwischen 10% und 20% einer Höhe des Führungsteils liegt. Für eine bevorzugte Höhe von zwischen 10 mm und 20 mm ergibt sich somit eine bevorzugte Wandstärke von zwischen 1 mm und 4 mm.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1a: eine axonometrische Ansicht einer erfindungsgemäßen Sicherungseinrichtung mit zwei Verbindungsmitteln in einer Grundposition;
- Fig. 1b: eine alternative axonometrische Ansicht einer erfindungsgemäßen Sicherungseinrichtung;
- Fig. 2a-2d: eine schematische Darstellung des Bewegungsablaufs der Sicherungseinrichtung von der Grundposition in eine Arbeitsposition;
- Fig. 3: eine Schnittdarstellung einer ersten Ausführungsvariante der Sicherungseinrichtung in der Grundposition;
- Fig. 4: eine Detaildarstellung aus Fig. 3;
- Fig. 5: eine Schnittdarstellung einer zweiten Ausführungsvariante der Sicherungseinrichtung in der Grundposition;
- Fig. 6: eine Draufsicht der Sicherungseinrichtung in der Grundposition;
- Fig. 7: eine Explosionsdarstellung der Sicherungseinrichtung nach Fig. 5.

### WEGE ZUR AUSFÜHRUNG DER ERFINDUNG

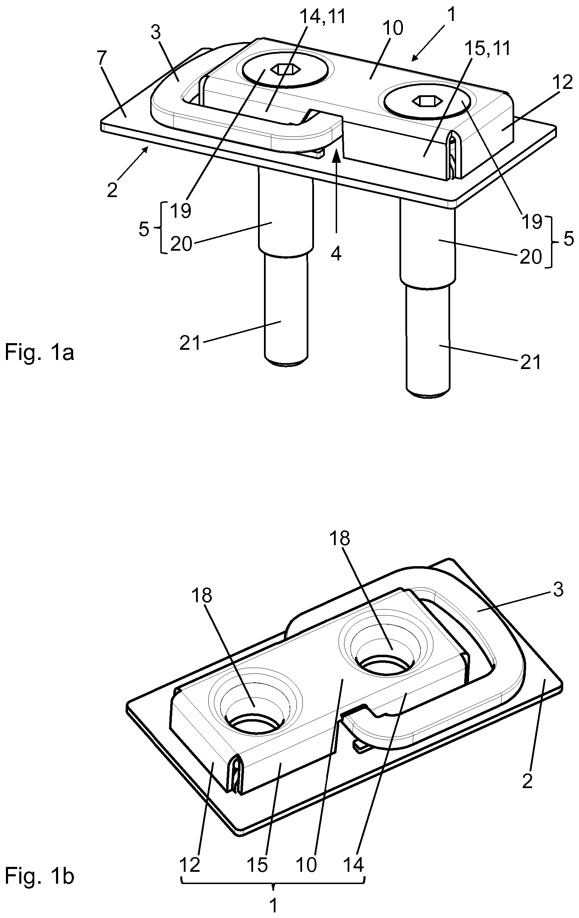

In den Figuren 1a und 1b ist eine Ausführungsvariante einer erfindungsgemäßen Sicherungseinrichtung, vorzugsweise eines Anschlagpunktes, abgebildet. Die Sicherungseinrichtung ist durch eine Anschlussplatte 2, welche im montierten Zustand an einem Untergrund anliegt, einen Führungsteil 1 und einen Ring 3 aufgebaut. Führungsteil 1 und Anschlussplatte 2 sind durch zwei Verbindungsmittel 5 miteinander verbunden und gegeneinander verspannt. Die in Fig. 1a dargestellten Verbindungsmittel 5 werden dabei durch je ein Verbindungselement 19 und eine Aufnahme 20 ausgebildet, wobei im vorliegenden Ausführungsbeispiel die Verbindungselemente 19 als Senkschrauben und die Aufnahmen 20 als Gewindebuchsen ausgebildet sind. Die Aufnahmen 20 sowie damit verbundene Verankerungsmittel 21, welche hier als Gewindestangen ausgebildet sind und zur Fixierung der Anschlussplatte 2 im Untergrund dienen, sind dabei im montierten Zustand im Untergrund versenkt. Bei dem Untergrund handelt es sich beispielsweise um eine Wand oder ein Metallgestänge, wobei mögliche Untergrundarten Mauerwerk, Beton, Stein, Holz oder Metall umfassen.

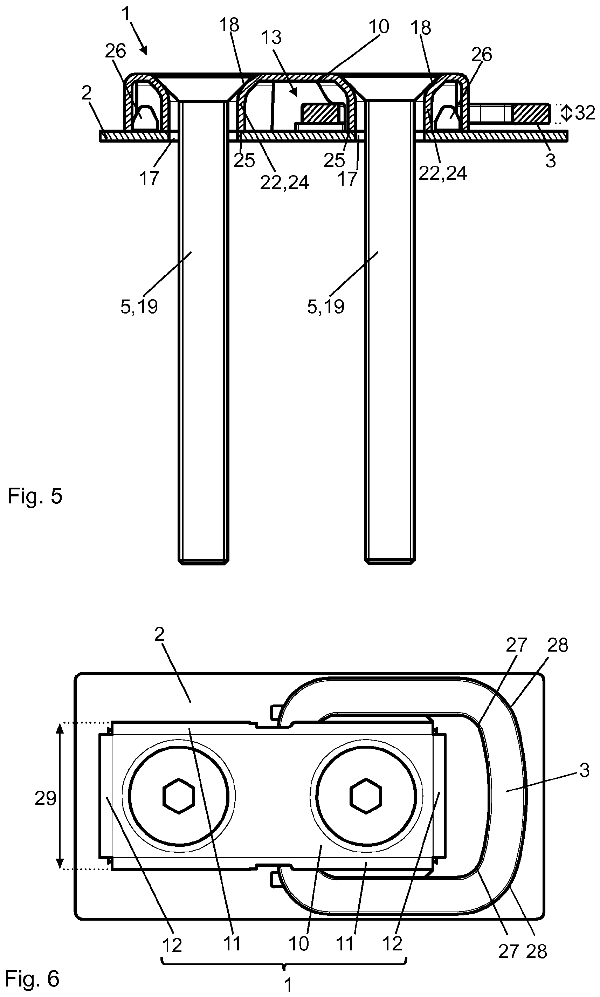

Die Gestaltung der Verbindungsmittel 5 ist für die Funktion der Erfindung als nebensächlich anzusehen, jedoch ist es vorteilhaft, wenn jedes Verbindungsmittel 5 ein Verbindungselement 19 umfasst. Die Verbindungselemente 19 können beispielsweise als Schrauben, Bolzen, Hülsen oder Stifte ausgebildet sind. Bevorzugt weisen die Verbindungselemente 19 einen Gewindeabschnitt auf. Wie in Fig. 5 zu sehen ist, können die Verbindungsmittel 5 auch aus den Verbindungselementen 19 bestehen, wobei die Verbindungselementen 19 im Ausführungsbeispiel als im Untergrund fixierbare Befestigungsschrauben ausgebildet sind.

Die Anschlussplatte 2 weist in jedem Fall eine ebene Fläche auf, welche als Auflagefläche 7 bezeichnet wird. Es ist aber auch denkbar, dass die Anschlussplatte 2 entlang des Umfangs in Richtung des Führungsteils 1 aufgebogen ist, sodass sich die Anschlussplatte 2 dosenförmig vom Untergrund nach außen erstreckt. Dadurch kann die Sicherungseinrichtung, beispielsweise bei der Anbringung in einer Betonwand, leicht verborgen werden, indem die Sicherungseinrichtung im Wesentlichen hinter einer ebenen Wandfläche angeordnet ist und durch einen Stopfen verschließbar ist, sodass eine ebene Wandfläche entsteht. Dabei ist es auch denkbar, dass die Anschlussplatte 2 als Teil eines speziellen Befestigungselementes ausgebildet ist, welches beispielsweise dynamische Lasten mittels Absorberelement dämpft oder an Metallprofilen, wie Metallständerwänden, Vorsatzschalen oder abgehängten Decken, angebracht ist und geeignet ist, dynamische Lasten aufzunehmen.

Der Führungsteil 1 umfasst eine Deckplatte 10, welche einen rechteckigen Umfang aufweist und parallel zur Anschlussplatte 2 bzw. der Auflagefläche 7 ausgerichtet ist, und vier Wandelemente 11,12, welche als ein Paar paralleler und gegenüberliegender erster Wandelemente 11 und ein Paar paralleler und um 90° gegenüber den ersten Wandelementen 11 versetzter zweiter Wandelemente 12 ausgebildet sind. Die Wandelemente 11,12 ragen im vorliegenden Ausführungsbeispiel rechtwinklig von der Deckplatte 10 ab und schließen einen rechten Winkel mit der Auflagefläche 7 der Anschlussplatte 2 ein. Die gedachten Kanten, an denen je ein erstes und ein zweites Wandelement 11,12 zusammenstoßen würden, weisen eine Freistellung auf, sodass die ersten und zweiten Wandelemente 11,12 nur über die Deckplatte 10 verbunden sind.

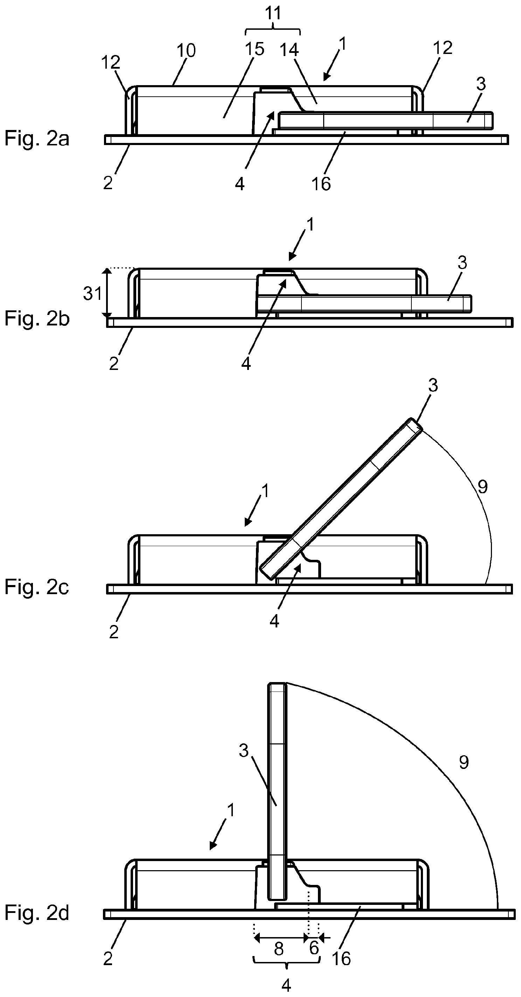

Der Führungsteil 1 weist eine Ausnehmung 4 auf, welche sich geradlinig von einer Seite des Führungsteils 1 zur anderen erstreckt. Genauer gesagt ist je eine Ausnehmung 4 in jeder der ersten Wandelemente 11 ausgebildet, wobei die Ausnehmung 4 jedes erste Wandelement 11 in einen ersten 14 und zweiten Wandteil 15 unterteilt. In der Ausnehmung 4 ist ein Ring 3 geführt und beweglich gelagert. In den Figuren 1a, 1b und 2a befindet sich der Ring 3 in einer Grundposition6, in welcher er parallel zu der Auflagefläche 7 der Anschlussplatte 2 ausgerichtet ist. In der Regel ist der Ring 3 in der Grundposition parallel zur Lotrichtung ausgerichtet. In jedem der durch die beiden Wandteile 14,15 gebildeten Bereiche des Führungsteils 1 ist jeweils, symmetrisch zu den Symmetrieachsen der Deckplatte 10, ein Verbindungsmittel 5 angeordnet.

Die Ausnehmung 4 weist, wie in den Figuren 2a bis 2d besonders gut zu erkennen ist, normal auf das erste Wandelement 11 gesehen, einen Rastabschnitt 6 und einen Arbeitsabschnitt 8 auf. Rastabschnitt 6 und Arbeitsabschnitt 8 sind durch zwei unterschiedlich große miteinander verbundene Rechtecke ausgebildet, welche bündig eine gemeinsame Unterkante ausbilden, welche Unterkante parallel zur Anschlussplatte 2 verläuft. Rastabschnitt 6 und Arbeitsabschnitt 8 sind durch einen vom Arbeitsabschnitt 8 ausgebildeten Übergangsabschnitt mit einer schrägen Fase verbunden. Das den Arbeitsabschnitt 8 der Ausnehmung 4 ausbildente größere Rechteck ist dabei symmetrisch zum Mittelpunkt des ersten Wandelements 11 ausgerichtet und erstreckt sich von der Anschlussplatte 2 bis hin zu einer Innenfläche der Deckplatte 10. Das den Rastabschnitt 6 ausbildende kleinere Rechteck ist gegenüber dem großen Rechteck seitlich versetzt, sodass es im ersten Wandteil 14 angeordnet ist und erstreckt sich in Richtung der Deckplatte 10 nur soweit, dass eine Dicke 32 des Rings 3 darin Platz findet. Die Ausnehmung 4 ist dabei in Richtung der Anschlussplatte 2 komplett geöffnet. In der Grundposition ist der Ring 3 im Rastabschnitt 6 des Querschnitts der Ausnehmung 4 verrastet und daher nicht mehr schwenkbar.

Die Figuren 2a bis 2d zeigen den Bewegungsvorgang der Sicherungseinrichtung von der Grundposition in eine Arbeitsposition, bei der der Ring 3 um einen Winkel 9 gegenüber der Auflagefläche 7 verschwenkt ist, wobei jeder Winkel 9 ungleich 0° und kleiner 180° denkbar ist, jedoch der bevorzugte Winkelbereich der Arbeitsposition zwischen 30° und 150° liegt. Aus der in Fig. 2a dargestellten Grundposition wird die Arbeitsposition dadurch erreicht, dass der Ring 3 aus dem Rastabschnitt 6 der Ausnehmung 4 in Richtung des zweiten Wandteils 15 verschoben wird, sodass der Ring 3 nicht mehr durch das kleine Rechteck an der Verschwenkung gehindert wird (siehe Fig. 2b). Dabei ist in diesen Abbildungen insbesondere noch einmal deutlich die zuvor beschriebene Form der Ausnehmung 4 zu erkennen. Auch zu erkennen ist eine Höhe 31 des Führungsteils 1, welche dem Abstand zwischen Anschlussplatte 2 und der der Anschlussplatte 2 abgewandten Fläche der Deckplatte 10 entspricht. Die Arbeitsposition ist beispielhaft in den Figuren 2c und 2d dargestellt, wobei der Winkel 9 in Figur 2c 45° und in Figur 2d 90° beträgt.

In der Arbeitsposition lässt sich nun ein nicht dargestelltes Sicherungsmittel, wie beispielsweise ein Seil, eine Leine oder ein Gurt, an den Ring 3, vorzugsweise mittels eines Hakens oder eines Karabiners, befestigen. Über das Sicherungsmittel wird im Belastungsfall eine Kraft über den Ring 3 in den Führungsteil 1 eingeleitet.

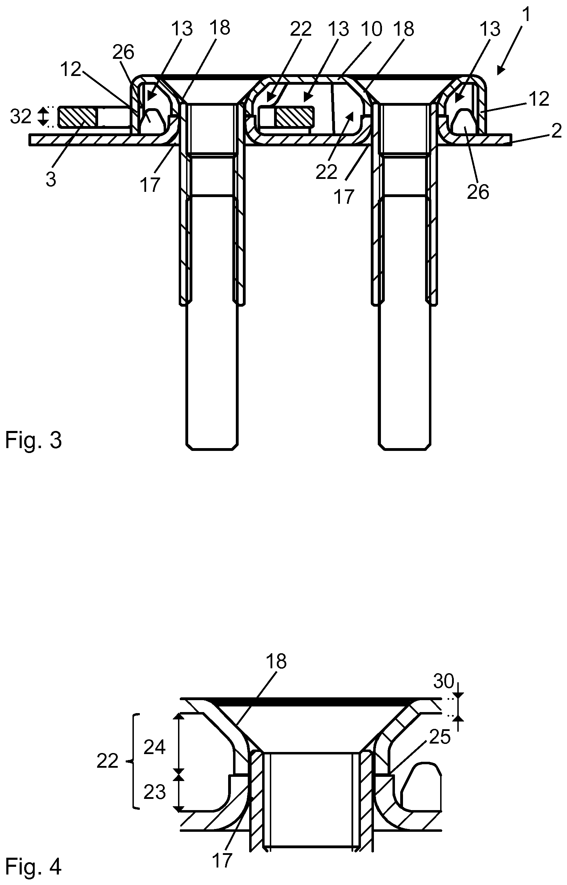

An der Unterkante der Ausnehmung 4 ist eine sich parallel zur Anschlussplatte 2 erstreckende Lasche 16 angeordnet, die im vorliegenden Ausführungsbeispiel durch eine L-förmig vom ersten Wandteil 14 abstehende Falz gebildet ist, wobei der Ring 3 in der Grundposition (siehe Fig. 3) auf der Lasche 16 aufliegt und somit von der Anschlussplatte 2 beabstandet ist.

Fig. 3 zeigt einen Längsschnitt durch die Sicherungseinrichtung, wobei daraus deutlich hervorgeht, dass sich zwischen den Wandelementen 11,12 und der Deckplatte 10 ein materialfreier Raum 13 ausbildet, welcher zumindest durch die Verbindungsmittel 5 überbrückt wird. Mit anderen Worten bilden Deckplatte 10 und Wandelemente 11,12 einen dosenförmigen Körper aus, welcher den durch die Anschlussplatte 2 begrenzten materialfreien Raum 13 bzw. einen Hohlraum umgibt. Durch das Vorsehen des materialfreien Raums 13 wird erreicht, dass der Führungsteil 1, insbesondere der mit dem Ring 3 in Kontakt stehende Teil der Deckplatte 10 bzw. der Wandteile 14,15, plastisch verformbar ist, wenn die über den Ring 3 eingeleitete Kraft einen oberen Schwellwert überschreitet. Durch die plastische Verformung ist eine rein optische Kontrolle möglich, um fest zu stellen, ob die Sicherungseinrichtung noch einsatzfähig ist. Da sich im Falle einer plastischen Verformung auch die Lasche 16 derart verformt, dass sich ein Abstand zwischen Lasche 16 und Anschlussplatte 2 ausbildet, kann auch eine einfache mechanische Prüfung der Einsatzfähigkeit erfolgen: Lässt sich der Ring 3 aus der Arbeitsposition nicht mehr in die Grundposition, in der er parallel zur Auflagefläche 7 ausgerichtet ist, bringen, weil die aufgebogene Lasche 16 die Rückstellung verhindert, so ist die Sicherungseinrichtung nicht mehr einsatzfähig und muss ausgetauscht oder unbrauchbar gemacht werden.

Des Weiteren lässt sich der so gestaltete Führungsteil 1 auch kostengünstig und schnell durch ein Tiefziehverfahren herstellen und muss nicht, wie nach dem Stand der Technik bekannt, aus dem Vollen gefräst werden. Dies wird auch durch eine Wandstärke 30 des Führungsteils 1 erreicht, welche so gewählt ist, dass sie zwischen 10% und 20% der Höhe 31 des Führungsteils 1 liegt. Im vorliegenden Ausführungsbeispiel beträgt die Wandstärke 30 1,55 mm, während die Höhe 31 11,6 mm beträgt.

Zur Aufnahme der Verbindungsmittel 5, welche wie zuvor beschrieben aus jeweils einem Verbindungselement 19 und einer Aufnahme 20 bestehen, weist die Anschlussplatte 2 zwei erste Öffnungen 17 auf, in welche die Aufnahmen 20 eingepresst sind, und weist die Deckplatte 10 zwei korrespondierende zweite Öffnungen 18 auf, um die Verbindungselemente 19 aufzunehmen. Die durch das Vorhandensein des materialfreien Raums 13 begünstigte plastische Verformung des Führungsteils 1, wirkt sich insofern nachteilig auf die Montage aus, als dass sich durch ein zu hohes Anzugsmoment der Verbindungselemente 19 bzw. durch eine zu hohe Anzugskraft der Verbindungsmittel 5 die Deckplatte 10 im Bereich der zweiten Öffnungen 18 plastisch verformt, wodurch es zu einer Versprödung des Materials kommt, sodass es im schlechtesten Fall zu einem vorzeitigen Bruch des Führungsteils 1 unter dynamischer Belastung kommt.

Daher ist zwischen den ersten Öffnungen 17 und den zweiten Öffnungen 18 ein Distanzelement 22 vorgesehen, welches den Abstand zwischen Deckplatte 10 und Anschlussplatte 2 überbrückt, sodass eine plastische Verformung des Führungsteils 1 bei üblichen Anzugsmomenten ausgeschlossen ist. Während in alternativen Ausführungsvarianten ein separates Distanzelement vorgesehen ist, welches zwischen Deckplatte 10 und Anschlussplatte 2 eingeklebt, eingeschweißt, eingelegt oder eingepresst ist, ist das Distanzelement 22 in der vorliegenden Ausführungsvariante durch die Anschlussplatte 2 und die Deckplatte 10 selbst ausgebildet.

Fig. 4 zeigt nun die Gestaltung des Distanzelementes 22 im Detail. Der die ersten Öffnungen 17 ausbildende Abschnitt der Anschlussplatte 2 ist als eine sich in Richtung der Deckplatte 10 erstreckende erste trichterförmige Auswölbung 23 ausgebildet. Der Durchmesser der ersten Auswölbung 23 verringert sich dabei von einem maximalen Durchmesser auf der dem Führungsteil 1 abgewandten Seite der Anschlussplatte 2 stetig zu einem minimalen Durchmesser, wobei der sich verringernde Abschnitt im Querschnitt einen Radius ausbildet, und erstreckt sich rohrförmig weiter in Richtung der Deckplatte 10.

Der die zweiten Öffnungen 18 ausbildende Abschnitt der Deckplatte 10 ist als eine sich in Richtung der Anschlussplatte 2 erstreckende zweite trichterförmige Auswölbung 24 ausgebildet. Der Durchmesser der zweiten Auswölbung verringert sich dabei ebenfalls von einem maximalen Durchmesser an der Deckplatte 10 zu einem minimalen Durchmesser, wobei die zweite Auswölbung 24 in dem der Deckplatte 10 zugewandten Bereich die Form eines hohlen Kegelstumpfs aufweist, welcher in einen rohrförmigen Abschnitt übergeht.

Die beiden Auswölbungen 23,24 berühren einander stumpf entlang einer kreisringförmigen Kontaktfläche 25 und bilden so gemeinsam das Distanzelement 22 aus, wobei die erste Auswölbung zwischen 30% und 50% und die zweite Auswölbung zwischen 50% und 70% des Distanzelementes 22 ausbilden. Grundsätzlich können die Verhältnisse zwischen den Auswölbungen 23,24 auch anders gestaltet sein.

In der in Fig. 5 dargestellten zweiten Ausführungsvariante ist das Distanzelement 22 vollständig durch die zweiten trichterförmigen Auswölbungen 24 der zweiten Öffnungen 18 der Deckplatte 10 ausgebildet. Die Anschlussplatte 2 ist im Bereich der ersten Öffnungen 17 eben ausgebildet, sodass sich die Kontaktfläche 25 zwischen der jeweiligen zweiten trichterförmigen Auswölbung 24 und der Anschlussplatte 2 ausbildet. Da die Verbindungsmittel 5 im vorliegenden Ausführungsbeispiel aus jeweils einem Verbindungselement 19, vorzugsweise einer Befestigungsschraube, bestehen, ragen die Verbindungselemente 19 durch die ersten Öffnungen 17 der Anschlussplatte 2.

Ebenfalls denkbar ist es, dass das Distanzelement 22 in einer alternativen Ausführungsvariante vollständig durch die erste Auswölbung 23 ausgebildet ist und sich die Kontaktfläche 25 zwischen der jeweiligen ersten Auswölbungen 23 und der Deckplatte 10 ausbildet.

Fig. 6 zeigt eine Draufsicht einer Sicherungseinrichtung in der Grundposition. Dabei ist insbesondere die Gestaltung des Rings 3 zu sehen, wobei ein Abschnitt des Rings 3 durch den Führungsteil 1 geführt ist, und sich der Ring 3 von dort aus parallel zu den beiden ersten Wandelementen 11 erstreckt und außerhalb des Führungsteils 1 geschlossen ist. Mit anderen Worten ist die Form des Rings 3 im Wesentlichen rechteckig, wobei im Zentrum eine ebenfalls im Wesentlichen rechteckige Ausnehmung vorgesehen ist, wobei die äußeren und inneren Kanten an ihren Übergängen abgerundet sind, sodass sich im Wesentlichen eine Kettengliedform ausprägt. Der Ring 3 ist dabei grundsätzlich eben ausgebildet, wobei die Wandstärke des Rings entlang ihres Umfangs im Wesentlichen konstant ist.

Der Ring 3 umgreift den den ersten Wandteil 14 ausbildenden Bereich des Führungsteils 1 vollständig bzw. umfasst zumindest eine Breite 29 des Führungsteils 1, welche dem Abstand zwischen den Außenseiten der beiden ersten Wandelemente 11 entspricht. Dabei ist zu sehen, dass der Ring 3 auf der den ersten Wandteilen 14 zugewandten Seite beim Übergang der die rechteckige Ausnehmung definierenden Kanten Innenradien 27 und auf der anderen Seite beim Übergang der den Umfang bildenden Kanten Außenradien 28 aufweist. Der Innenradius 27 beträgt dabei 4,5 mm während der Außenradius 10,5 mm beträgt, um die Kerbwirkung zu reduzieren.

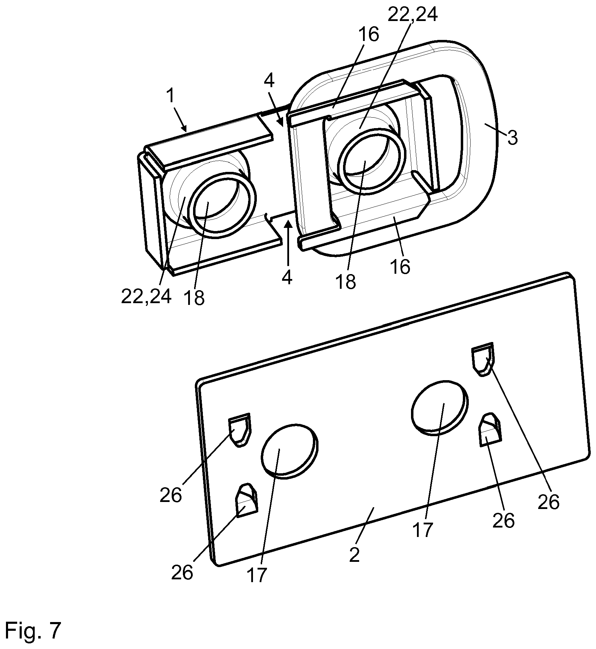

Zum besseren Verständnis zeigt Figur 7 eine Explosionsdarstellung der zweiten Ausführungsvariante der Erfindung, die oben bereits diskutiert wurde. Insbesondere lässt sich gut erkennen, dass die Anschlussplatte 2 vier aufgebogene Positioniernasen 26 aufweist, welche eine einfache Ausrichtung von Anschlussplatte 2 und Führungsteil 1 ermöglichen. Wenn der Führungsteil 1 auf die Positioniernasen 26 aufgeschoben ist, ist sichergestellt, dass die ersten Öffnungen 17 der Anschlussplatte 2 und die zweiten Öffnungen 18 des Führungsteils 1 fluchtend zueinander positioniert sind, um die Verbindungsmittel 5 in einfacher Art und Weise einführen zu können. Ebenfalls sind die beiden seitlich von den ersten Wandteilen 14 der ersten Wandelemente 11 abstehenden Laschen 16 sowie die Ausbildung des Distanzelements 22 durch die zweiten trichterförmigen Auswölbungen 24 der zweiten Öffnungen 18 deutlich zu erkennen.

### BEZUGSZEICHENLISTE

- 1: Führungsteil
- 2: Anschlussplatte
- 3: Ring
- 4: Ausnehmung
- 5: Verbindungsmittel
- 6: Rastabschnitt
- 7: Auflagefläche
- 8: Arbeitsabschnitt
- 9: Winkel
- 10: Deckplatte
- 11: erste Wandelemente
- 12: zweite Wandelemente
- 13: materialfreier Raum
- 14: erster Wandteil
- 15: zweiter Wandteil
- 16: Lasche
- 17: erste Öffnungen
- 18: zweite Öffnungen
- 19: Verbindungselement
- 20: Aufnahme
- 21: Verankerungsmittel
- 22: Distanzelement
- 23: erste Auswölbung
- 24: zweite Auswölbung
- 25: Kontaktfläche
- 26: Positioniernase
- 27: Innenradius des Rings 3
- 28: Außenradius des Rings 3
- 29: Breite des Führungsteils 1
- 30: Wandstärke des Führungsteils 1
- 31: Höhe des Führungsteils 1
- 32: Dicke des Rings 3

## Patentansprüche

1. Sicherungseinrichtung, vorzugsweise Anschlagpunkt, für ein Abseil- oder Absturzsystem, umfassend
- einen Führungsteil (1), welcher eine Ausnehmung (4) aufweist,
- eine Anschlussplatte (2), welche mit einem Untergrund verbindbar ist und über zumindest zwei Verbindungsmittel (5) mit dem Führungsteil (1) verbunden ist und
- einen Ring (3) zur Anbindung von Sicherungsmitteln, wobei der Ring (3) durch die Ausnehmung (4) geführt ist und in dieser bewegbar gelagert ist, wodurch der Ring (3) in einer Grundposition parallel zu einer ebenen Auflagefläche (7) der Anschlussplatte (2) ausgerichtet ist und in einer Arbeitsposition einen Winkel (9) ungleich 0° mit der Auflagefläche (7) einschließt,
wobei der Führungsteil (1) eine Deckplatte (10) und Wandelemente (11,12) umfasst, wobei sich die Wandelemente (11,12) winkelig, vorzugsweise rechtwinkelig, von der Deckplatte (10) in Richtung der Anschlussplatte (2) erstrecken und sich ein von Deckplatte (10) und Wandelementen (11,12) begrenzter materialfreier Raum (13) ausbildet, um eine plastische Verformung des Führungsteils (1) im Bereich der Ausnehmung (4) zu ermöglichen, wenn eine über den Ring (3) eingeleitete Kraft einen oberen Schwellwert überschreitet,
wobei die Anschlussplatte (2) erste Öffnungen (17) für die Verbindungsmittel (5) und die Deckplatte (10) zweite Öffnungen (18) für die Verbindungsmittel (5) aufweist, **dadurch gekennzeichnet, dass**
zwischen jeweils einer ersten Öffnung (17) und einer zweiten Öffnung (18) ein Distanzelement (22) angeordnet ist, um den Abstand zwischen Deckplatte (10) und Anschlussplatte (2) zu überbrücken.

2. Sicherungseinrichtung nach Anspruch 1, **dadurch gekennzeichnet, dass** die Wandelemente (11,12) als zumindest ein Paar zueinander paralleler, einander gegenüberliegender erster Wandelemente (11) und ein Paar zueinander paralleler, einander gegenüberliegender zweiter Wandelemente (12) ausgebildet sind.

3. Sicherungseinrichtung nach einem der Ansprüche 1 bis 2, **dadurch gekennzeichnet, dass** die Wandelemente (11,12) untereinander nur über die Deckplatte (10) verbunden sind.

4. Sicherungseinrichtung nach Anspruch 3, **dadurch gekennzeichnet, dass** der Führungsteil (1) durch ein Tiefziehverfahren hergestellt ist.

5. Sicherungseinrichtung nach einem der Ansprüche 1 bis 4, **dadurch gekennzeichnet, dass** der Ring (3) in der Grundposition auf einer sich parallel zur Auflagefläche (7) erstreckenden, vom ersten Wandelement 11 ausgebildeten Lasche (16) aufliegt und durch die Lasche (16) von der Anschlussplatte (2) beabstandet ist.

6. Sicherungseinrichtung nach einem der Ansprüche 1 bis 5, **dadurch gekennzeichnet, dass** die Ausnehmung (4) einen Rastabschnitt (6) zur Fixierung des Rings (3) in der Grundposition und einen Arbeitsabschnitt (8) zur Aufnahme des Rings (3) in der Arbeitsposition aufweist.

7. Sicherungseinrichtung nach einem der Ansprüche 1 bis 6, **dadurch gekennzeichnet, dass** die Verbindungsmittel (5) als jeweils ein Verbindungselement (19), vorzugsweise eine Schraube, und eine mit dem Verbindungselement (19) verbundene Aufnahme (20), vorzugsweise Gewindehülse, ausgebildet sind, wobei die Aufnahmen (20) in ersten Öffnungen (17) der Anschlussplatte (2) angeordnet sind.

8. Sicherungseinrichtung nach Anspruch 7, **dadurch gekennzeichnet, dass** die Aufnahmen (20) mit Verankerungsmitteln (21) verbindbar sind, welche Verankerungsmittel (21) zur Befestigung im Untergrund dienen.

9. Sicherungseinrichtung nach Anspruch einem der Ansprüche 1 bis 8, **dadurch gekennzeichnet, dass** der die ersten Öffnungen (17) ausbildende Abschnitt der Anschlussplatte (2) als eine sich in Richtung der Deckplatte (10) ersteckende erste trichterförmige Auswölbung (23) ausgebildet ist.

10. Sicherungseinrichtung nach Anspruch 9, **dadurch gekennzeichnet, dass** das Distanzelement (22) durch die erste trichterförmige Auswölbung (23) ausgebildet ist.

11. Sicherungseinrichtung nach einem der Ansprüche 1 bis 10, **dadurch gekennzeichnet, dass** der die zweiten Öffnungen (18) ausbildende Abschnitt der Deckplatte (10) als eine sich in Richtung der Anschlussplatte (2) ersteckende zweite trichterförmige Auswölbung (24) ausgebildet ist.

12. Sicherungseinrichtung nach Anspruch 11, **dadurch gekennzeichnet, dass** das Distanzelement (22) durch die zweite trichterförmige Auswölbung (24) ausgebildet ist.

13. Sicherungseinrichtung nach den Ansprüchen 9 und 11,
**dadurch gekennzeichnet, dass** das Distanzelement (22) von der ersten (23) und zweiten trichterförmigen Auswölbung (24) ausgebildet ist, wobei sich zwischen den Auswölbungen (23,24) eine Kontaktfläche (25) ausbildet.

14. Sicherungseinrichtung nach einem der Ansprüche 1 bis 13, **dadurch gekennzeichnet, dass** der Ring (3) abschnittsweise einen Innenradius (27) und einen Außenradius (28) aufweist, wobei der Außenradius (28) um den Faktor 2 bis 4 größer ist als der Innenradius (27) und/oder dass der Innenradius (27) des Rings (3) in einem Bereich zwischen 10% und 30% einer Breite (29) des Führungsteils (1) liegt.

15. Sicherungseinrichtung nach einem der Ansprüche 1 bis 14, **dadurch gekennzeichnet, dass** eine Wandstärke (30) des Führungsteils (1) in einem Bereich zwischen 10% und 20% einer Höhe (31) des Führungsteils (1) liegt.

## Claims

1. A securing device, preferably a fastening point, for an abseiling or fall-protection system, comprising
- a guide part (1) which has an aperture (4),
- a connection plate (2) which is connectable to an underlying surface and is connected to the guide part (1) via at least two connecting means (5), and
- a ring (3) for attaching securing means, wherein the ring (3) is guided through the aperture (4) and is mounted movably therein, whereby the ring (3) in a basic position is oriented parallel to a flat support face (7) of the connection plate (2) and in a working position forms an angle (9) unequal to 0° with the support face (7), wherein the guide part (1) comprises a cover plate (10) and wall elements (11, 12), wherein the wall elements (11, 12) extend at an angle, preferably at a right angle, from the cover plate (10) in the direction of the connection plate (2) and form a material-free space (13) delimited by the cover plate (10) and wall elements (11, 12) in order to allow a plastic deformation of the guide part (1) in the region of the aperture (4) if a force introduced via the ring (3) exceeds an upper threshold value, wherein the connection plate (2) has first openings (17) for the connecting means (5) and the cover plate (10) has second openings (18) for the connecting means (5),
**characterised in that**
a spacer element (22) is disposed between each first opening (17) and each second opening (18) in order to bridge the distance between cover plate (10) and connection plate (2).

2. The securing device according to claim 1, **characterised in that** the wall elements (11, 12) are formed as at least one pair of mutually parallel, mutually opposed first wall elements (11) and a pair of mutually parallel, mutually opposed second wall elements (12).

3. The securing device according to any one of claims 1 to 2, **characterised in that** the wall elements (11, 12) are connected to one another only via the cover plate (10).

4. The securing device according to claim 3, **characterised in that** the guide part (1) is produced by a deep drawing method.

5. The securing device according to any one of claims 1 to 4, **characterised in that** the ring (3) in the basic position rests on a tab (16), which extends parallel to the support face (7) and is formed by the first wall element (11), and is spaced from the connection plate (2) by the tab (16).

6. The securing device according to any one of claims 1 to 5, **characterised in that** the aperture (4) has a detent portion (6) for fixing the ring (3) in the basic position and a working portion (8) for receiving the ring (3) in the working position.

7. The securing device according to any one of claims 1 to 6, **characterised in that** the connecting means (5) are formed as, in each case, a connecting element (19), preferably a screw, and a receptacle (20) connected to the connecting element (19), preferably a threaded sleeve, wherein the receptacles (20) are disposed in first openings (17) of the connection plate (2).

8. The securing device according to claim 7, **characterised in that** the receptacles (20) are connectable to anchoring means (21), which anchoring means (21) serve for securing in the underlying surface.

9. The securing device according to any one of claims 1 to 8, **characterised in that** the portion of the connection plate (2) forming the first openings (17) is formed as a first funnel-shaped protrusion (23) extending in the direction of the cover plate (10).

10. The securing device according to claim 9, **characterised in that** the spacer element (22) is formed by the first funnel-shaped protrusion (23).

11. The securing device according to any one of claims 1 to 10, **characterised in that** the portion of the cover plate (10) forming the second openings (18) is formed as a second funnel-shaped protrusion (24) extending in the direction of the connection plate (2).

12. The securing device according to claim 11, **characterised in that** the spacer element (22) is formed by the second funnel-shaped protrusion (24).

13. The securing device according to claims 9 and 11, **characterised in that** the spacer element (22) is formed by the first (23) and second funnel-shaped protrusion (24), wherein a contact face (25) forms between the protrusions (23, 24).

14. The securing device according to any one of claims 1 to 13, **characterised in that** the ring (3), in portions, has an inner radius (27) and an outer radius (28), wherein the outer radius (28) is greater by a factor of 2 to 4 than the inner radius (27), and/or **in that** the inner radius (27) of the ring (3) lies in a range between 10% and 30% of a width (29) of the guide part (1).

15. The securing device according to any one of claims 1 to 14, **characterised in that** a wall thickness (30) of the guide part (1) lies in a range between 10% and 20% of a height (31) of the guide part (1).

## Revendications

1. Dispositif de fixation, de préférence un point d'attache, pour un système de descente en rappel ou de protection contre les chutes, comprenant
- une partie de guide (1) qui présente un orifice (4),
- une plaque d'accouplement (2) qui peut être connectée à une surface sous-jacente et est accouplée à la partie de guide (1) par l'intermédiaire d'au moins deux moyens d'accouplement (5), et
- un anneau (3) destiné à attacher un moyen de fixation, dans lequel l'anneau (3) est guidé à travers l'orifice (4) et est monté de manière mobile à l'intérieur de celle-ci, moyennant quoi l'anneau (3) dans une position basique est orienté parallèlement à une face de soutien plate (7)de la plaque d'accouplement (2) et dans une position de fonctionnement forme un angle (9) différent de 0° avec la face de soutien (7), dans lequel la partie de guide (1) comprend une plaque de couverture (10) et des éléments de paroi (11, 12), dans lequel les éléments de paroi (11, 12) s'étendent à un angle, de préférence à un angle droit, depuis la plaque de couverture (10) dans la direction de la plaque d'accouplement (2) et forment un espace exempt de matière (13) délimité par la plaque de couverture (10) et les éléments de paroi (11, 12) afin de permettre une déformation plastique de la partie de guide (1) dans la région de l'orifice (4) si une force introduite par l'intermédiaire de l'anneau (3) dépasse une valeur de seuil supérieur,
dans lequel la plaque d'accouplement (2) a de premières ouvertures (17) pour le moyen d'accouplement (5) et la plaque de couverture (10) a de secondes ouvertures (18) pour les moyens d'accouplement (5),
**caractérisé en ce que**
un élément espaceur (22) est disposé entre une première ouverture (17) et une seconde ouverture (18) dans chaque cas afin de combler la distance entre la plaque de couverture (10) et la plaque d'accouplement (2).

2. Dispositif de fixation selon la revendication 1, **caractérisé en ce que** les éléments de paroi (11, 12) sont formés en tant qu'au moins une paire de premiers éléments de paroi (11) mutuellement parallèles, mutuellement opposés et une paire de seconds éléments de paroi (12) mutuellement parallèles, mutuellement opposés.

3. Dispositif de fixation selon l'une quelconque des revendications 1 à 2, **caractérisé en ce que** les éléments de paroi (11, 12) sont accouplés l'un à l'autre uniquement par l'intermédiaire de la plaque de couverture (10).

4. Dispositif de fixation selon la revendication 3, **caractérisé en ce que** la partie de guide (1) est produite par un procédé d'emboutissage profond.

5. Dispositif de fixation selon l'une quelconque des revendications 1 à 4, **caractérisé en ce que** l'anneau (3) dans la position de base repose sur une patte (16), qui s'étend parallèlement à la face de soutien (7) et est formé par le premier élément de paroi (11), et est espacé de la plaque d'accouplement (2) par la patte (16).

6. Dispositif de fixation selon l'une quelconque des revendications 1 à 5, **caractérisé en ce que** l'orifice (4) a une partie de détente (6) destinée à fixer l'anneau(3) dans la position de base et une partie de fonctionnement (8) destinée à recevoir l'anneau (3) dans la position de fonctionnement.

7. Dispositif de fixation selon l'une quelconque des revendications 1 à 6, **caractérisé en ce que** les moyens de connexion (5) sont formés en tant que, dans chaque cas, un élément d'accouplement (19), de préférence une vis, et un réceptacle (20) accouplé à l'élément d'accouplement (19), de préférence un manchon fileté, dans lequel les réceptacles (20) sont disposés dans de premières ouvertures (17) de la plaque d'accouplement (2).

8. Dispositif de fixation selon la revendication 7, **caractérisé en ce que** les réceptacles (20) peuvent être accouplés à des moyens d'ancrage (21), lesquels moyens d'ancrage (21) servent à la fixation dans la surface sous-jacente.

9. Dispositif de fixation selon l'une quelconque des revendications 1 à 8, **caractérisé en ce que** la partie de la plaque d'accouplement (2) formant les premières ouvertures (17) est formée en tant que première saillie en forme d'entonnoir (23) s'étendant dans la direction de la plaque de couverture (10).

10. Dispositif de fixation selon la revendication 9, **caractérisé en ce que** l'élément espaceur (22) est formé par la première saillie en forme d'entonnoir (23).

11. Dispositif de fixation selon l'une quelconque des revendications 1 à 10, **caractérisé en ce que** la partie de la plaque de couverture (10) formant les secondes ouvertures (18) est formée en tant que seconde saillie en forme d'entonnoir (24) s'étendant dans la direction de la plaque d'accouplement (2).

12. Dispositif de fixation selon la revendication 11, **caractérisé en ce que** l'élément espaceur (22) est formé par la seconde saillie en forme d'entonnoir (24).

13. Dispositif de fixation selon les revendications 9 et 11, **caractérisé en ce que** l'élément espaceur (22) est formé par la première (23) et la seconde saillie en forme d'entonnoir (24), dans lequel une face de contact (25) se forme entre les saillies (23, 24).

14. Dispositif de fixation selon l'une quelconque des revendications 1 à 13, **caractérisé en ce que** l'anneau (3), par parties, a un rayon interne (27) et un rayon externe (28), dans lequel le rayon externe (28) est supérieur d'un facteur de 2 à 4 au rayon interne (27), et/ou **en ce que** le rayon interne (27) de l'anneau (3) se situe dans une plage entre 10 % et 30 % d'une largeur (29) de la partie de guide (1).

15. Dispositif de fixation selon l'une quelconque des revendications 1 à 14, **caractérisé en ce que** une épaisseur de paroi (30) de la partie de guide (1) se situe dans une plage entre 10 % et 20 % d'une hauteur (31) de la partie de guide (1).
